# EUROPEAN PATENT SPECIFICATION

(11) **EP 1 312 817 B1**
(45) Date of publication and mention of the grant of the patent: **17.12.2014**
(21) Application number: 02025731.7
(22) Date of filing: 15.11.2002
(51) Int. Cl.: F16C 33/14, F16C 33/30

(54) **Rotary member and production process**
Drehelement und Herstellungsverfahren
Corps rotatif et son procédé de fabrication

(30) Priority: 15.11.2001 JP 2001349645; 22.11.2001 JP 2001356817; 27.11.2001 JP 2001360946
(43) Date of publication of application: 21.05.2003
(73) Proprietor: NISSAN MOTOR CO., LTD., Yokohama-shi, Kanagawa 221-0023 (JP)
(72) Inventor: Hirai, Eiji, 1-chome, Chuo-ku, Tokyo 103-0027 (JP); Okuhata, Mitsuhiro, 1-chome, Chuo-ku, Tokyo 103-0027 (JP); Kino, Nobuo, Yokosuka-shi, Kanagawa 237-0062 (JP); Otani, Keizo, Kamakura-shi, Kanagawa 247-0063 (JP); Furukawa, Tomofumi, Isehara-shi, Kanagawa 259-1117 (JP)
(74) Representative: Grünecker, Kinkeldey, Stockmair & Schwanhäusser

(56) References cited:
- US-A- 2 980 987
- US-A- 4 508 396
- US-A- 4 886 585
- US-A- 5 927 865
- PATENT ABSTRACTS OF JAPAN vol. 0124, no. 54 (M-769), 29 November 1988 (1988-11-29) & JP 63 180722 A (NIPPON SEIKO KK), 25 July 1988 (1988-07-25)

## Description

### BACKGROUND OF THE INVENTION

The present invention relates to a rotary member and its production process. For examples, the rotary member may be: a grease-sealed bearing used in alternator of motor vehicle, electromagnetic clutch, idler pulley and other accesory equipment for an engine; a rolling bearing used in fuel injector pump; a rolling bearing for supporting a torque transmitting member such as a gear in a multi speed transmission, and a rolling member in a continuously variable transmission; a rolling bearing used in a compressor of air conditioner; a rolling member such as discs and power rollers in continuously variable transmission; and a gear of any of various types used in motor vehicle. More specifically, the present invention relates to the structure and production process of a rotary member adapted to restrain short-life flaking like hydrogen embrittlement due to hydrogen penetrating into base material such as steel in the rotary member.

In recent years, there are demands for power trains of smaller size and lighter weight, to improve fuel efficiency and increase power. Accordingly, rotary members such as rolling bearings, gears, and the like used in various portions in a power train are required to bear severe conditons of heavy load and high rotational speed with the construction of smaller size and lighter weight.

In the case of a grease-sealed bearing for alternator or electromagnetic clutch, the bearing is operated in stringent environment of heavy load, high speed and strong vibration due to vibration of engine. As a result, the use for only short time could cause structure change of peculiar mode underneath the rolling surface, and the resulting flaking as reported in (D1) "A new Type of Microstructural Change in Bearings for Electrical Instruments and Auxiliary Devices of Automotive Engines" NTN Technical Review No. 61 (1992), (D1') "Brittle Flaking on Bearings for Electrical Instruments and Auxiliary Devices and Life Extension of these Bearings" NTN Technical Review No. 61 (1992), and (D2) "Study on Fatigue Mechanism of Bearings for Automotive Alternators", NSK Technical Journal No. 656 (1993).

The cause for this short-life flaking is thought to be that the use in the severe environment of heavy load, high speed rotation, and strong vibration causes mirror surface wearing in rolling contact surface, the formation of fresh metal surface caused by this wear plays a catalytic role to decompose grease, and the hydrogen thus generated intrudes into steel, which results in the hydrogen embrittlement like flaking.

In the case of a rolling bearing in a compressor of an air conditioner, the bearing is lubricated with a mixture of lubricant and refrigerant. For the protection of earth environment, a new refrigerant of a type including hydrofluorocarbon (HFC) is used as alternative to fluon. With this replacement of the refrigerant, the lubricant is replaced, too, from the lubricant prepared from petroleum such as naphthene-type and paraffin-type, to lubricant soluble in HFC such as polyalkylene glycol (PAG) or polyolester (POE). As a result, a peculiar structure change could occur in the inside under the rolling contact surface and cause flaking before long, as recited in (D3) Tribologist, Vol. 37, No.11 (1992), and (D4) Published Japanese Patent Application *Kokai No*. H08(1996)-177864.

This short-life flaking is probably caused by microsopic metal contact generated between a rolling element and a bearing ring under the new condition of film of the new refrigerant. Fresh metal surface bared by this metal contact acts to decompose hydrocarbon or water in the lubricant, and the resulting hydrogen intrudes into the metal and enbrittles the internal structure.

As measures against the above-described short-life hydrogen embrittlement like flaking, there have been proposed technique in which triiron tetroxide is formed on the rolling surface by blackening treartment or black oxide finishing (as proposed in (D5) Published Japanese Patent Application *Kokai No.* H02(1990)-190615 ≈ U.S. Patent 5,150,974); technique in which a lubricant containing a deactivator is used to reform the rolling surface so that the reaction of deactivator is accelerated (as proposed in (D6) Published Japanese Patent Application *Kokai No.* 2001-20958); and technique in which the content of Cr of base material is increased to form an inert oxide film such as FeCrO4 on the surface (as proposed in (D4) Published Japanese Patent Application *Kokai No.* H08(1996)-177864).

### SUMMARY OF THE INVENTION

In either case, it is thought that the hydrogen embrittlement like flaking in the rolling surface is caused by the process of (1) a first step in which hydrogen atoms or ions are generated by the decomposition of hydrocarbon or entering water → (2) a second step in which the generated hydrogen atoms or ions intrude into steel → (3) a third step in which the material is embrittled by the intruding hydrogen.

In these techniques, an inert oxide film is formed on a rolling surface, to restrain catalytic action, and thereby to reduce the amount of hydrogen generated the the decomposition reaction of hydrocarbon or water. Namely, these techniques are measures in the above-mentioned step (1). However, the catalytic action for the decomposition reaction of hydrocarbon is performed not only by the fresh metal surface but also by acid etc. yielded by the decomposition of entering water and additives. Therefore, the inert film is not complete for restraining the generation of hydrogen, depending on the lubrication environment, and not sufficient to prevent hydrogen from intruding into steel.

Addition of Al, Nb, N, etc. to steel is another example to improve the resistance of material against hydrogen embrittlement by decreasing the size of austenitic crystal grains (as disclosed in (D7) Published Japanese Patent Application *Kokai No.* H05(1993)-255809). This example is the measure treating the above-mentioned step (3). However, the structure of finer crystal grains increases the area ratio of crystal grain boundary serving as a hydrogen intruding passage, and thereby tends to increase the amount of hydrogen intruding into steel.

Therefore, it is realized that there are demands for rotary members that can restrain the hydrogen embrittlement like short-life flaking by improving the aforementioned hydrogen intruding step (2), which has not been improved by the conventional example, by restraining the intrusion of hydrogen into steel even if the amount of generated hydrogen is increased by changes in service environment or lubrication environment.

Specifically, the hydrogen embrittlement like short-life flaking can occur not only in grease-sealed bearings used in alternator of motor vehicle, electromagnetic clutch, idler pulley and other accesory equipment for an engine, and bearings used In a compressor of an air conditioner; but also In rolling members such as discs and power rollers In continuously variable transmissions, gears In transmissions, torque transmitting members and bearings In continuously variable transmissions, and rolling bearings used In fuel Injector pumps, and other rotary members which are required to bear heavy load, higher rotating speed and strong vibrations, with smaller size and ligher weight.

US-A-4508396 according to the preambles of claims 1, 13 and 14 discloses a method of producing a bearing component including a metal substrate of high speed steel and a coating layer. The coating layer includes an outermost silver layer having a thickness of 0.2 - 0.6 µm, a nickel intermediate layer having a thickness of 0.1 - 0.3 µm, and a copper intermediate layer having a thickness of 0.05 - 0.2 µm on the radial inner side of the outermost silver layer.

It is the object of the present invention to provide a rotary member resistant to short-life flaking and a production method for such a rotary member.

This object is solved by the features of claims 1, **13** and **14**, respectively.

Further improvements are laid down in the subclaims.

The other objects and features of this invention will become understood from the following description with reference to the accompanying drawings.

### BRIEF DESCRIPTION OF THE DRAWINGS

FIG. 1 is a graph showing measured values of the hydrogen diffusion coefficient of elements forming coating film and/or concentrated portion in practical examples according to one embodiment of the present invention.
FIG. 2 is a graph showing measured values of the hydrogen diffusion coefficient of compounds forming a coating film and/or concentrated portion in practical examples according to the embodiment the present invention.
FIG. 3 is a sectional view for illustrating rolling fatigue test of a thrust roller bearing employed in the embodiment of the present invention.
FIG. 4 is a side view for illustrating bench rapid acceleration/deceleration test for a deep groove ball bearing employed in the embodiment of the present invention.
FIG. 5 is a sectional view for illustrating a thrust test of a thrust roller bearing employed in the embodiment of the present invention.
FIGS. 6A and 6B show, in side view and front elevation, roller pitching test for small roller and large roller employed in the embodiment of the present invention. The front elevation is taken from the axial direction.
FIG. 7 is a view for illustrating conditions of heat treatment for carbonitriding quenching employed in the embodiment of the present invention.
FIGS. 8A and 8B are photographs showing microstructures of two different types in section in the rolling direction near a flaking portion in a thrust ball bearing.
FIG. 9 is a graph showing a profile of Ni concentration confirmed by Auger spectroscopy in a rotary member subjected to Ni plating.
FIG. 10 is a graph showing a profile of Ni concentration confirmed by Auger spectroscopy in a rotary member subjected to Ni plating and running-in operation.
FIG. 11A is a schematic sectional view illustrating the structure of a sample in the case of FIG. 9. FIG. 11B is a schematic sectional view illustrating the structure of a sample of FIG. 10.
FIG. 12 is a photograph showing a sectional structure (with white structure) near a flaking portion of a rotary member.
FIG. 13 is a photograph showing a sectional structure (with white structure) near a flaking portion of a rotary member.
FIG. 14 is a photograph showing a sectional structure (without white structure) near a flaking portion of a rotary member.

### DETAILED DESCRIPTION OF THE INVENTION

In one embodiment of the present invention, a rotary member for contacting with a mating body in relative motion, with the aid of a lubricant such as oil or grease or other lubricant containing hydrocarbon, includes at least: a base region of a ferrous base material such as steel; and a hydrogen blocking layer (or hydrogen trap layer) formed in a contact surface. The hydrogen blocking layer includes at least a concentrated portion or layer of a substance (low hydrogen diffusion substance)(element and/or compound) lower in the hydrogen diffusion coefficient than the base material. In addition to the concentrated portion, the hydrogen blocking layer may include a coating layer or film containing, as main component, a substance (element and/or compound) lower in the hydrogen diffusion coefficient than the base material. According to the invention, the thickness of coating layer is smaller than 0.1 µm. The thus-formed hydrogen blocking layer functions to restrain the intrusion, into the base region of the ferrous base material such as steel, of hydrogen produced by the decomposition of hydrocarbon or water during the rolling or sliding movement.

The hydrogen blocking layer formed in the contact surface acts to retard the diffusion of hydrogen and trap hydrogen in the surface layer. Accordingly, this structure can retard the intrusion of hydrogen Into the internal region exposed to higher stress, and reduce the amount per unit time, of hydrogen diffused into the inside. Even if a coating layer is removed by wearing or separation, the hydrogen blocking function of the concentrated portion or layer can continue stably for long. The concentrated portion in the form of a layer formed in the entirety of the contact surface is preferable. However, it is optional to form the concentrated portion only in a region or regions of the contact surface where the possibility of generation of hydrogen is high. For example, it is possible to achieve a sufficient hydrogen blocking function with a concentrated portion formed in a region near a terminal portion of a contact eclipse where the oil film tends to become thin and hydrogen tends to be produced.

The hydrogen diffusion coefficient D of the low hydrogen diffusion substance (element and/or compound) may be: D≤10⁻⁵ (cm²/s) at 10³/T(K)≥2. Preferably, D≤10⁻⁶ (cm²/s) at 10³/T(K)≥2. More desirably, D≤10⁻⁸ (cm²/s) at 300 (K).

In general, the diffusion coefficient of hydrogen in material increases with increase in temperature according to Arrhenius relationship {exp(-Q/RT)}. As to gears, bearings and other rotary members in motor vehicles, the temperature in most cases is equal to or lower than about 200°C even in the most stringent situations. In such a temperature region, the hydrogen diffusion coefficient in steel material is approximately in the range of 10⁻⁴ ~ 10⁻³ (cm²/sec) at 10³/T(K) = 2~2.5, and in the range of in the range of 10⁻⁶ ~ 10⁻⁴ (cm²/sec) at 10³/T(K) = 3.3 (300K).

In an embodiment according to the present invention, the hydrogen blocking layer is made of a substance having a significantly low hydrogen diffusion coefficient in the temperature range equal to or lower than about 200°C, as compared to the steel base material. With the hydrogen blocking layer, the hydrogen blocking or trapping effect is improved significantly.

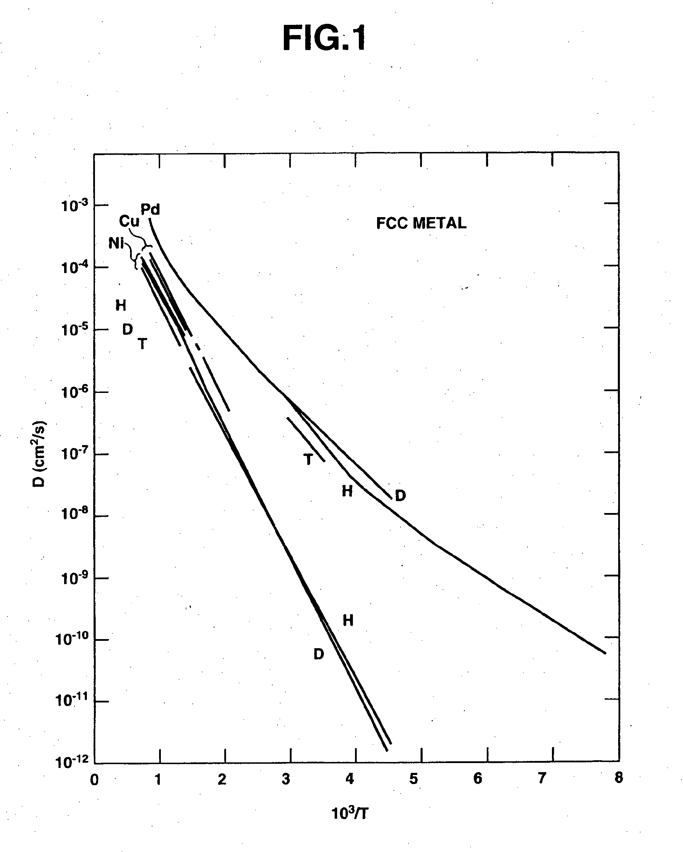

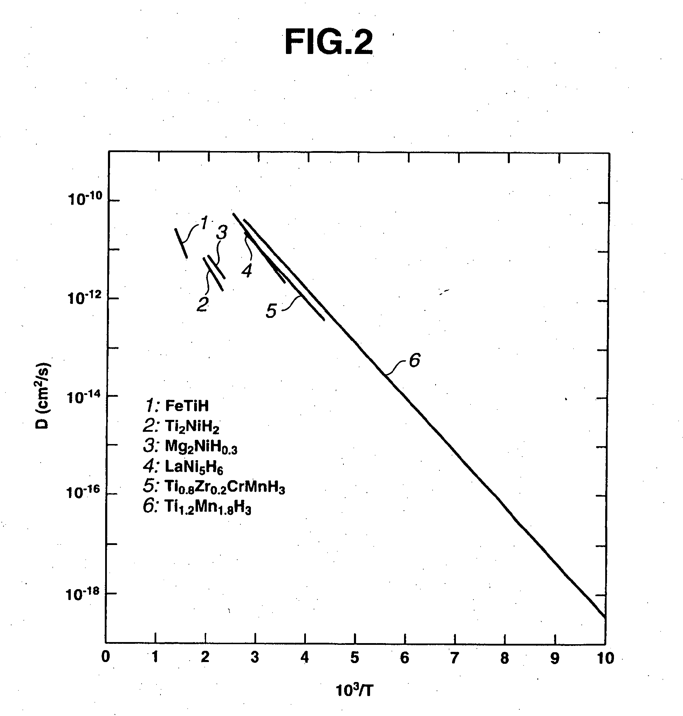

Some examples of the low hydrogen diffusion substance are: elements such as Pd, Ni and Cu, and intermetallic compounds such as TiFeH, Ti2NiH2, Mg2NiH0.3, and LaNi5H6. However, the present invention is not limited to these substances. FIGS. 1 and 2 show measurement examples of the hydrogen diffusion coefficient of various substances.

In the embodiment of the present invention, the low hydrogen diffusion substance is a substance having a face-centered cubic (fcc) structure. According to the current knowledge, the diffusion of hydrogen or motion of hydrogen atoms is said to be due to the quantum mechanical tunnel effect. A fcc metal is larger in spacing between adjacent positions in the lattice structure as compared to steel (of bcc or bct structure), so that a particle can pass only through a vibration excitation level near a potential peak, and hence the hydrogen diffusion coefficient becomes lower in the case of the fcc metal as compared to the bcc metal. Specifically, Ni and Cu are preferable fcc metals having low hydrogen diffusion coefficients.

The hydrogen blocking layer can be formed, for example, by plating to form a coating layer. It is optional to employ other fcc elements such as Pd, or steel material containing a large amount of retained austenite having a fcc structure.

The concentrated portion having a thickness (or depth) equal to or greater than 50 nm can provide a sufficient effect of blocking intrusion of hydrogen into the base region, like a coating film, and maintain the superior hydrogen blocking performance of the concentrated portion for a long time. The concentrated portion having a thickness (or depth) equal to or greater than 100 nm is preferable for maintaining the hydrogen blocking function for a longer time. Moreover, it is preferable to set the maximum concentration of the low hydrogen diffusion substance (element or compound) equal to or higher than 5 at% in the concentrated portion.

In a production method according to the embodiment of the present invention, for producing a rotary member used under the condition of lubrication with a lubricant such as oil, grease or a mixture of a refrigerant such as hydrofluorocarbon (HFC) and a lubricant soluble in the refrigerant, a base region of a ferrous base material is prepared, and thereafter a concentrated portion is formed for example by forming a coating layer of a low hydrogen diffusion substance which is lower in hydrogen diffusion coefficient than the base material and by causing the low hydrogen diffusion substance of the coating layer to diffuse into the base material. In this case, the low hydrogen diffusion substance of the coating layer is the same as that of the concentrated layer. The concentrated layer can be formed by causing the low hydrogen diffusion substance of the coating layer to diffuse into the base material by a running-in operation of putting the rotary member in frictional contact with a mating body.

The concentrated portion may be formed by ion implantation. However, this method tends to increase the manufacturing cost. One of methods advantageous in cost is the method of forming a coating film or layer on a base region by relatively easy surface treatment such as electroplating, and forming a concentrated portion by a running-in operation or a normal operation in an assembled state to enable the substance of the coating layer to penetrate and diffuse into the base material of the base region by repetition of pressure application and heating. By utilizing the diffusion of the low hydrogen diffusion substance into the base material, it is possible to form the hydrogen trap concentrated layer or the combination of a coating layer and a concentrated portion easily.

[Practical Examples] Practical Examples (PE) of a rotating member will now be described, and the usefulness thereof will be shown in comparison with comparative examples (CE). In the examples, measured values for the rotating member were obtained by the following methods.

### Practical Examples PE 1 to 4, 6 to 20 and 22 do not fall in one of the claims 1 to 20.

[Measuring method for film thickness] For the thickness of a film (or coating film or layer) in a prepared specimen, the cross section of a film forming portion (portion including the film) was quantified by observation using a SEM (Scanning Electron Microscope).

[Measuring method for phosphorus content in film] The phosphorus content in a film (or coating film or layer) of the prepared specimen was quantified by using a commercially-available fluorescent X-ray spectrometer. Measurement was carried out for a plurality of samples having different phosphorus contents which were known. From the strength of each sample, an intensity-content calibration curve was prepared. The rotating member was cut into an appropriate size under the same condition, and measurement was made. The measured intensity was converted into phosphorus content in accordance with the aforementioned calibration curve.

### [Measuring method for concentrated layer]

The thickness or depth of a concentrated layer (Conc) in a sample was quantified by measurement of depth profile from a contact surface by using an Auger spectroscopy (SAM4300 produced by PHI).

[Hydrogen diffusion coefficient of element forming a coating film] Use was made of values measured by Fukai et al. (FIGS. 1 and 2) and recited in "The Metal-Hydrogen Systems-Basic Bulk Properties, Springer (1993)", Bulletin of Japan Institute of Metals 24 (1985).

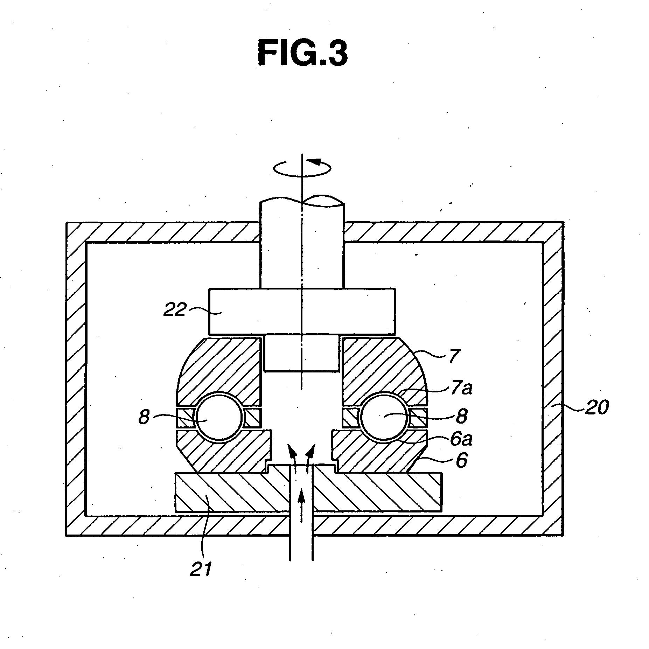

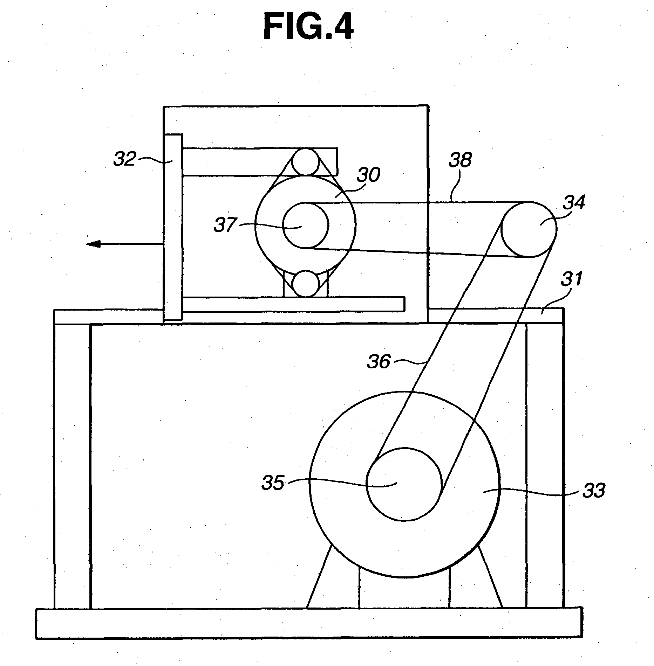

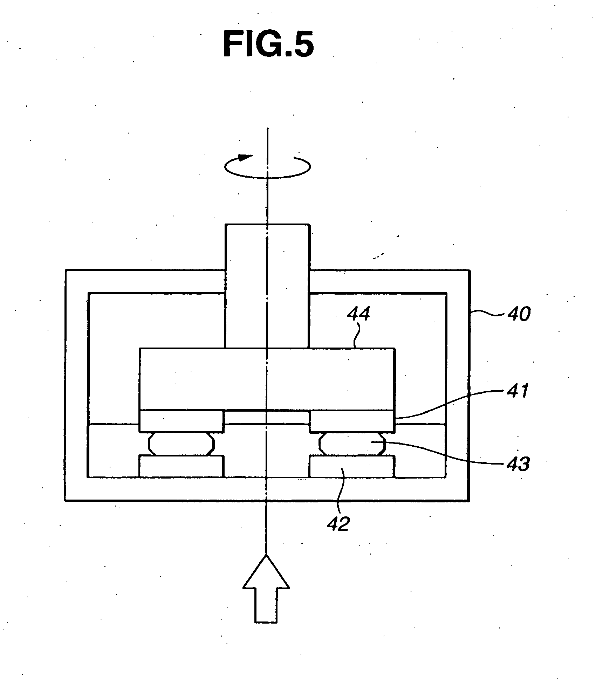

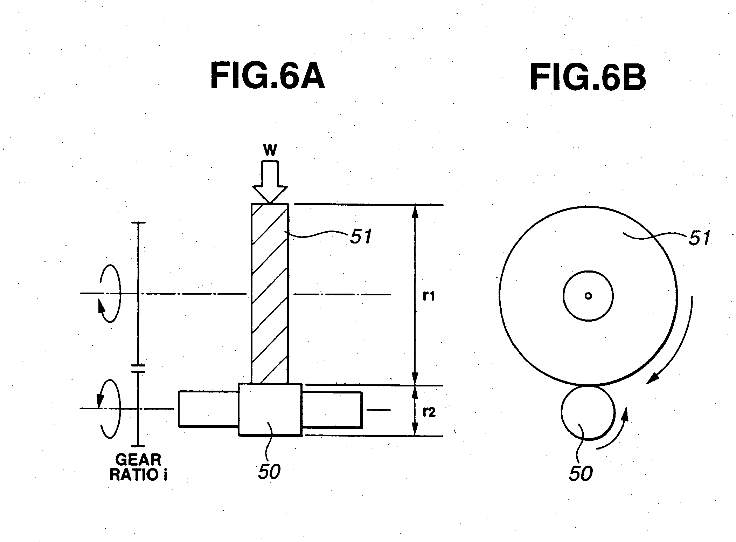

Next, a manufacturing method for the rotating member according to the embodiment of the present invention will be described. Advantages of the embodiment were evaluated by using as a member for contacting with a mating member in rolling contact, or a member (bearing, for example) for contacting with a mating member in rolling contact with slight sliding motion relative to the mating member, a thrust ball bearing shown in FIG. 3, a deep groove ball bearing shown in FIG. 4, for supporing a rotation shaft of an automobile alternator, and a thrust ball bearing shown in FIG. 5, and by using, as a member (such as gear) for contacting with a mating member in sliding contact, small and large rollers shown in FIGS. 6A and 6B.

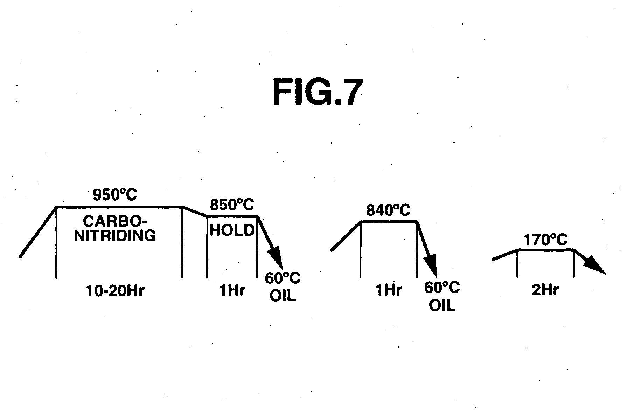

As to inner and outer rings of the thrust ball bearing shown in FIG. 3, and small and large rollers shown in FIG. 6A and 6B, raw material having a composition shown in Table 1 was shaped by forging roughly into a desired shape, and thereafter carbonitriding quenching was performed under the condition of heat treatment shown in FIG. 7.

**Table 1**

| C | Si | Mn | Cr | Mo | P | S |
|---|---|---|---|---|---|---|
| 0.2 | 0.25 | 0.8 | 1.1 | 0.15 | 0.015 | 0.009 |

Then, grinding or grinding super finishing was performed to a rolling contact portion (contact surface). As to the thrust ball bearing of FIG. 3, the bearing groove was completed so that the surface hardness is HV700~HV720, and the surface roughness is about Ra0.03. As to the small and large rollers of FIGS. 6A and 6B, the rolling contact portion was completed so that the surface hardness is HV700~HV720, and the surface roughness is about Ra0.2. As to the deep groove ball bearing of FIG. 4 and the thrust ball bearing of FIG. 5, a commercially available bearing of bearing steel SUJ2 was used.

Then, various coatings (Films) and concentrated layers (abbreviated to Conc in tables) were formed under the following conditions to the above-mentioned bearings and test pieces.

[Conditions for forming a coating film containing, as main component, nickel (Ni)]
1) Base material on which a coating film is formed: Race surface of rolling bearing, and small and large rollers.
2) Composition of plating bath:
A. Strike plating bath (Ni based)

| | |
|---|---|
| Nickel chloride | 200 g/L |
| Hydrochloric acid | 80 g/L |
| Boric acid | 30 g/L |
| pH | 1 or less |
| Plating bath temperature | 50 ~ 55°C |
| Current density | 0.1 ~ 10 A/dm² |

B. Electroplating bath (Ni based)

| | |
|---|---|
| 60% sulfamic acid Nickel (aqueous solution) | 800 g/L |
| Nickel chloride | 15 g/L |
| Boric acid | 45 g/L |
| Saccharin soda | 5 g/L |
| 50% hypophosphorous acid (aqueous solution) | 0 or 1 g/L |
| pH | 4 ~ 5 |
| Plating bath temperature | 55 ~ 60°C |
| Current density | 1 ~ 10 A/dm² |

C. Electroless plating bath (Ni based)

| | |
|---|---|
| Nickel chloride | 16 g/L |
| Sodium hypophosphite | 24 g/L |
| Sodium succinate | 16 g/L |
| Malic acid | 18 g/L |
| Diethylamine | 10 g/L |
| pH | 5 ~ 6 |
| Plating bath temperature | 90 ~ 95°C |

### [Conditions for forming a coating film containing as a main component copper (Cu)]

### D. Electroplating bath (Cu based)

| | |
|---|---|
| Cuprous cyanide | 60 g/L |
| Sodium cyanide | 75 g/L |
| Sodium carbonate | 30 g/L |
| PH | 12 ~ 13 |
| Plating bath temperature | 50 ~ 60°C |
| Current density | 2 ~ 5 A/dm² |

### E. Electroless plating bath (Cu based)

| | |
|---|---|
| Copper sulfate | 10 g/L |
| Rochelle salt | 50 g/L |
| Sodium hydroxide | 10 g/L |
| Formalin (37%)(aqueous solution) | 10 g/L |
| Stabilizer | very small amount |
| pH | 11 ~ 13 |
| Plating bath temperature | Room temperature |

### [Conditions for forming a coating film containing as a main component palladium (Pd)]

### F. Electroplating bath (Pd based)

| | |
|---|---|
| Palladium sodium chloride | 5 g/L |
| Sodium nitrite | 15 g/L |
| Sodium chloride | 35 g/L |
| PH | 5 ~ 7 |
| Plating bath temperature | 40 ~ 45°C |
| Current density | 0.5 ~ 1 A/dm² |

[Conditions for forming Ni concentrated layer]
1) Base material on which a coating film is formed: Thrust ball bearing, race surfaces of inner and outer rings of deep groove ball bearing, and small and large rollers.
2) Composition of plating bath: Use was made of baths identical to the before-mentioned Ni strike plating bath
   (A), electroplating bath (B), and electroless plating bath (C).
3) Conditions for running-in: In this embodiment, a concentrated layer (Conc) was formed by running-in operation (Run-In) after simplified forming of a coating film.
   a) Thrust ball bearing: Under the condition of forced lubrication of traction oil, a running-in operation for 1~10 hours was performed at a surface pressure (or bearing pressure) of 2~3 GPa.
   b) Deep groove ball bearing: Under the condition of grease lubrication, a running-in operation for 1~10 hours was performed at an axial load of about 1kN.
   c) Thrust roller bearing: In a clean oil bath, a running-in operation for 1~10 hours was performed at a load of about 3kN.
   d) Small roller: Under the condition of forced lubrication of traction oil, a running-in operation for 1~10 hours was performed at a surface pressure of 1~2 GPa.

Practical Example 1 (PE1) and Practical Example 3(PE3): After strike plating (abbreviated to Strike in **Tables) including Ni as a main component was performed** by using the bath of (A), to bearing grooves in inner and outer rings of a rolling bearing, a coating film including Ni as a main component was formed by electroplating using the bath of (B). As the plating bath (B) used in forming the coating film containing as a main component, Ni by the electroplating method, the practical example 3 (PE3) employed a bath to which 1 g/L of 50% hypophosphorous acid was added, and the practical example 1 (PE1) employed a plating bath to which 50% hypophosphorous acid was not added.

Practical Example 2 (PE2): After strike plating **including Ni as a main component was performed by using** the bath of (A), to bearing grooves in inner and outer rings of a rolling bearing, a coating film including Ni as a main component was formed by electroless plating using the bath of (C).

Practical Example 4 (PE4) and Practical Example 5 (PES): After strike plating including Ni as a main component was performed by using the bath of (A), to bearing grooves in inner and outer rings of a rolling bearing, a coating film including Ni as a main component was formed by electroplating using the bath of (B). Thereafter, a Ni concentrated layer was formed in a base material surface layer by performing a running-in operation under the above-mentioned conditions. As to Practical Example 4 (PE4), to the surface to which the running-in operation was performed, Ni coating was **formed successively by strike plating (with the bath of (A))** and electroplating (with the bath of (B)).

Practical Example 6 (PE6) and Practical Example (PE7): A coating film containing Cu as main component was formed on a race surface of a rolling bearing, by electroplating (with the bath of (D)). In Practical Example 7 (PE7), a running-in operation was performed under the abovementioned conditions after the Cu plating, and Cu plating was performed again after the running-in operation.

Practical Example 8 (PE): A coating film containing Pd as a main component was formed on a race surface of a rolling bearing by electroplating with the bath of (F).

Comparative Example 1 (CE1): A sample not subjected to plating was prepared.

Comparative Example 2 (CE2): Surface treatment (treatment with iron oxide) as mentioned In (D5) Published Japanese Patent Application *Kokai No.* H02(1990)-190615 (-United States Patent 5,150,974).

Practical Example 9 (PE9): After strike plating including Ni as a main component was performed with the bath of (A), to an outer ring portion of a deep groove ball bearing, a coating film containing Ni as main component was formed by electroplating (with the bath of (B)).

Practical Example 10 (PE10): After strike **plating including Ni as a main component was performed** with the bath of (A), to an outer ring portion of a deep groove ball bearing, a coating film containing Ni as main component was formed by electroplating (with the bath of (B)). Thereafter, a Ni concentrated layer was formed in a base material surface layer by performing a running-in operation under the above-mentioned conditions. To the surface subjected to the running-in operation, a Ni coating **film was formed successively by Ni strike plating (with the** bath of (A)) and electroplating (with the bath of (B)).

Practical Example 11 (PE11): After strike **plating including Ni as a main component was performed** with the bath of (A), to an outer ring portion of a deep groove ball bearing, a coating film containing Ni as main component was formed by electroplating (with the bath of (B)). Thereafter, a Ni concentrated layer was formed in a base material surface layer by performing a running-in operation under the above-mentioned conditions.

Practical Example 12 (PE12): To an outer ring portion of a deep groove ball bearing, a coating film containing Cu as main component was formed by electroplating (with the bath of (D)).

Comparative Example 3 (CE3): A deep groove ball bearing not subjected to plating was prepared.

Practical Example 13 (PE13): After strike **plating including Ni as a main component was performed** with the bath of (A), to a roller rolling surface of a thrust roller bearing, a coating layer containing Ni as main component was formed by electroplating (with the bath of (B)).

Practical Example 14 (PE14): After strike plating including Ni as a main component was performed with the bath of (A), to a roller rolling surface of a thrust roller bearing, a coating film containing Ni as main component was formed by electroplating (with the bath of (B)). Thereafter, a Ni concentrated layer was formed on a base material surface layer by performing a running-in operation under the above-mentioned conditions.

Practical Example 15 (PE15): An electroplating coating film including Cu as a main component was formed on a roller rolling surface of a thrust roller bearing, by electroplating (with the bath of (D)).

Practical Example 16 (PE16): An electroplating **coating film including Cu as a main component was formed** on a roller rolling surface of a thrust roller bearing, by electroplating (with the bath of (D)). Thereafter, a Cu concentrated layer was formed in a base material surface layer by performing a running-in operation under the above-mentioned conditions.

Comparative Example 4 (CE4): A thrust roller bearing not subjected to plating to a rolling surface was prepared.

Practical Example 17 (PE17): After strike **plating including Ni as a main component was performed** with the bath of (A), to a roller rolling surface of a thrust roller bearing, a coating film containing Ni as main component was formed by electroplating (with the bath of (B)). After the formation of this Ni electroplating coating film, a baking operation of 130°C×20 hours was performed in a vacuum furnace.

Practical Example 18 (PE18): After strike plating including Ni as a main component was performed with the bath of (A), to a roller rolling surface of a thrust roller bearing, a coating film containing Ni as main component was formed by electroplating (with the bath of (B)). Thereafter, a Ni concentrated layer was formed in a base material surface layer by performing a running-in operation under the above-mentioned conditions.

Practical Example 19 (PE19): An electroplating **coating film including Cu as a main component was formed** on a roller rolling surface of a thrust roller bearing, by electroplating (with the bath of (D)).

Comparative Example 5 (CE5): Another thrust roller bearing not subjected to plating to a rolling surface was prepared.

Practical Example 20 (PE20): After strike **plating including Ni as a main component was performed** with the bath of (A), to a small roller, a coating film containing Ni as main component was formed by electroplating (with the bath of (B)).

Practical Example 21 (PE21): After strike plating **including Ni as a main component was performed with the** bath of (A), to a small roller as in Practical Example 20, a coating film containing Ni as main component was formed by electroplating (with the bath of (B)). Thereafter, a running-in operation was performed under the above-mentioned conditions, to the small roller formed with this Ni coating film. After the running-in operation, to the surface subjected to the running-in operation, a coating film containing Ni as main component was formed successively by Ni strike plating (with the bath of (A)) and electroplating (with the bath of (B)). In this way, a Ni concentrated layer was formed in the sliding surface of the small roller.

Practical Example 22 (PE22): A coating film containing Cu as a main component was formed to small and large rollers, by electroplating (with the bath of (D)).

Comparative Example 6 (CE6): A small roller not subjected to electroplating was prepared.

Next, a method for evaluating the rotary members of the practical examples and comparative examples will be described.

(I) Thrust ball bearing (simulating T-CVT: Practical Examples 1~8, Comparative Examples 1 and 2) A rolling fatigue life test was performed for race surfaces of inner and outer rings (bearing groove) by using a bearing rolling fatigue testing machine as shown in FIG. 3. The testing machine shown in FIG. 3 includes a casing 20 in which a bearing having balls 8 between an inner ring 7 and an outer ring 6 is placed. The testing machine further includes a plate 21 for holding the lower surface of outer ring 6, and a rotating shaft 22 for abutting on the upper surface of inner ring 7 with a predetermined pressing force. While a lubricating oil is supplied to the inside of inner ring 7 through plate 21, inner ring 7 is rotated with rotating shaft 22.

Traction oil was used for lubrication, and test conditions were so set that a maximum contact surface pressure became equal to 3.6GPa under forced lubrication of 3L/min. A rolling fatigue life was detected with a vibration sensor, and the test time was measured until the **condition of flaking was reached by a bearing groove** portion 7a or 6a of inner or outer ring 7 or 6. The thus-measured test time up to the condition of flaking was taken as a duration of life.

Table 2 (placed at the end of Detailed Description of the Invention) shows results of the rolling fatigue life test carried out under the above-mentioned conditions for Practical Examples (PE) 1~8, and Comparative Examples (CE) 1 and 2, together with values of properties of coating films (Film) and concentrated layers (Conc layer) of bearing groove portions before testing, and methods for forming the films and concentrated layers. Table 3 shows results obtained by cutting out rolling portions from samples having different structure change patterns in bearing groove portion after the rolling fatigue test, which was subjected to the rolling fatigue test, and by measuring the quantity of diffusible hydrogen in steel.

**Table 3**

| Bearing groove portion | Amount of diffusible hydrogen (ppm) |
|---|---|
| New product | 0.7 |
| Long-life product | 1.2 |
| Short-life product | 4.1 |

(II) Deep groove ball bearing (simulating engine accessory/alternator, idler pulley, and bearing for air conditioner electromagnetic clutch: Practical Examples (PE) 9~12, Comparative Example (CE) 3) A rapid acceleration/deceleration (up-down cyclic revolution) test was conducted by using a bench rapid acceleration/deceleration (up-down) testing machine as shown in FIG. 4, and an actual alternator for automobile using a deep groove ball bearing (6303 type) for supporting a rotating shaft. The bench rapid acceleration/deceleration testing machine of FIG. 4 includes a holder 32 movable in a horizontal direction on a base 31, a drive motor 33 disposed under base 31, and an intermediate pulley 34 disposed on base 31. Holder 32 is arranged to support an alternator 30. An output pulley 35 of drive motor 33 is connected with intermediate pulley 34 by a first belt 36, and intermediate pulley 34 is connected with an input pulley 37 of alternator 30 by a second belt 38. Alternator 30 is driven by drive motor 33 through first and second belts 36 and 38 and intermediate pulley 34. The load to a rotating portion of alternator 30 can be varied by shifting holder 32 in the horizontal direction and varying the tension of second belt 38.

The axial load was set equal to about 1.8 kN, and the revolution speed of input pulley 37 was changed for several seconds repeatedly in a pattern of 2000 rpm → 14000 rpm → 2000 rpm. A rolling fatigue life was detected with a vibration sensor, and the test time was measured until the occurrence of flaking in the bearing groove portion of the inner or outer ring of a front side bearing. The thus-measured test time was used as a duration of life.

Table 4 (placed at the end of Detailed Description of the Invention) shows results of the rolling fatigue life test carried out under the above-mentioned conditions for Practical Examples (PE) 9~12, and Comparative Example (CE) 3, together with values of properties of coating layers and concentrated layers of deep groove ball bearings (6303) before testing, and methods for forming the films and concentrated layers. (In Table 4, DEC stands for Dark Etching Constituent.) Table 5 shows results obtained by cutting out rolling portions from samples having different structure change patterns of deep groove ball bearings after the rolling fatigue test, which was subjected to the rolling fatigue test, and by measuring the quantity of diffusible hydrogen in steel.

**Table 5**

| Outer ring | Amount of diffusible hydrogen (ppm) |
|---|---|
| New product | 0.7 |
| Lonq-life product | 1.1 |
| Short-life product | 3.1 |

(III) Thrust roller bearing (assuming a roller bearing for a fuel pump: Practical Examples (PE) 13~16, Comparative Example (CE) 4): A rolling test was conducted by using a thrust testing machine as shown in FIG. 5 for a roller bearing (FNTA-2542C produced by NSK). The testing machine of FIG. 5 includes a casing 40 for receiving a bearing including a plurality of needle rollers interposed between an inner ring 41 and an outer ring 42. An inside bottom of casing 40 supports the lower side of outer ring 42, and a rotating shaft 44 presses the upper surface of inner ring 41 with a predetermined pressing force. A lubricating oil is supplied into casing 40. Inner ring 41 is rotated together with rotating shaft 44.

A rolling test was conducted by preparing a lubricating oil containing a water content of about 1000 ppm by adding water to engine oil, and supplying the lubricating oil into casing 40. A rolling fatigue life was detected with a vibration sensor, and a test time until flaking of a rolling member (roller) was used as a life.

Table 6 (at the end of Detailed Description of the Invention) shows results of the rolling fatigue life test carried out under the above-mentioned conditions for Practical Examples (PE) 13~16, and Comparative Example (CE) 4, together with values of properties of coating layers and concentrated layers of thrust roller bearing before testing, and methods for forming the films and layers. Table 7 shows results obtained by cutting out rolling portions from samples having different structure change patterns of thrust roller bearings after the rolling fatigue test, which was subjected to the rolling fatigue test, and by measuring the quantity of diffusible hydrogen in steel.

**Table 7**

| Roller | Amount of diffusible hydroqen (ppm) |
|---|---|
| New product | 0.4 |
| Lonq-life product | 0.9 |
| Short-life product | 2.1 |

(IV) Thrust roller bearing (assuming a bearing in an air conditioner compressor: Practical Examples (PE) 17~19, Comparative Example (CE) 5): As to a roller bearing shown in FIG. 5 (FNTA-2542C produced by NSK), by using a thrust testing machine and by preparing a lubricating liquid mixture by mixing 97% of white kerosene and 3% of polyalkylene glycol (PAG) serving as a lubricant with reference to (D4) Published Japanese Patent Application *Kokai No*. H08-177864, a rolling test was conducted in this lubricating liquid mixture. A rolling fatigue life was detected with a vibration sensor, and a test time until flaking of a rolling member (roller) was used as a life.

Table 8 (at the end of Detailed Description of the Invention) shows results of the rolling fatigue life test carried out under the above-mentioned conditions for Practical Examples (PE) 17~19, and Comparative Example (CE) 5, together with values of properties of coating films and concentrated layers of thrust roller bearing before testing, and methods for forming the films and layers. Table 9 shows results obtained by cutting out rolling portions from samples having different structure change patterns of thrust roller bearings after the rolling fatigue test, which has been subjected to the rolling fatigue test, and by measuring the quantity of diffusible hydrogen in steel.

**Table 9**

| Roller | Amount of diffusible hydroqen (ppm) |
|---|---|
| New product | 0.4 |
| Long-life product | 0.6 |

(V) Roller pitching test (simulating a gear: Practical Examples (PE) 20~22, Comparative Example (CE) 6): As to a small roller 50 and a large roller 51 shown in FIG. 6, a rolling fatigue life test of small roller was conducted by using a roller pitching test machine shown in FIG. 4. This test was for evaluating the rolling fatigue life of a rotating member, such as a gear, which is used in the condition of a rolling contact with slide of a relatively large extent.

Traction oil was used for lubrication, and test conditions were so set that a maximum contact bearing pressure became equal to 3.0GPa under forced lubrication of 2L/min, and a relative slip rate was 60% with a gear provided in the test machine. A rolling fatigue life was detected with a vibration sensor, and the test time until the condition of flaking was reached by small roller 50 or large roller 51 was taken as a duration of life.

Table 10 (at the end of Detailed Description of the Invention) shows results of the rolling fatigue life test carried out under the above-mentioned conditions for Practical Examples (PE) 20~22, and Comparative Example (CE) 6 together with values of properties of coating films and concentrated layers of thrust roller bearing before testing, and methods for forming the films and layers.

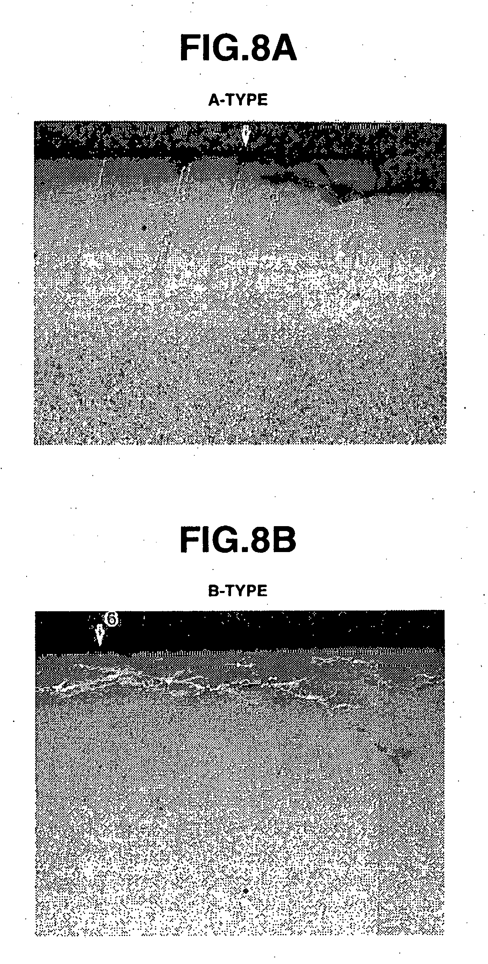

FIGS. 8A and 8B are photographs of cross-sectional microstructure in the rolling direction near a flaking portion of a thrust ball bearing. FIGS. 8A and 8B show two different white structures. Under the test conditions using the thrust ball bearing, all the samples suffering flaking showed an A-type structure change **shown in** **FIG. 8A** **or a B-type structure change shown in** FIG. 8B near a flaking portion. The A-type structure change was observed in relatively long life samples whereas the B-type structure change was observed in relatively short life smaples. Tables 2, 4, 6, 8 and 10 show the type of structure change together with the results of rolling fatigue testing.

Table 11 shows results obtained by cutting out rolling portions from samples having different structure change patterns after the rolling fatigue test and by measuring the quantity of diffusible hydrogen in steel. The measurement was made by using a thermal desorption gas analyzer (UPM-ST-200R manufactured by ULVAC), and the quantity of hydrogen released at a heating temperature of 400°C or lower was taken as the quantity of diffusible hydrogen.

**Table 11**

| Structure change | Amount of diffusible hydrogen (ppm) | Life |
|---|---|---|
| A-Type | 1.8 | Long |
| B-Type | 4.1 | Short |

As evident from Table 11, the amount of penetrating hydrogen is greater in the B-type reaching flaking with a shorter life than in the A-type. Accordingly, it can be considered that the B-type structure change is a mode of flaking like hydrogen embrittlement due to penetrating hydrogen. Accordingly, it is possible to prolong the life by restraining the penetration of hydrogen to shift the structure pattern from the B-type to the A-type.

Table 2 confirms that samples of the examples provided with a hydrogen blocking (or shutoff) surface layer according to the present invention show the A-type structure change under the genuine rolling conditions only with very small sliding motion, as the result of the rolling fatigue life test to the bearing groove portion, and hence the samples of the examples according to the present invention are significantly improved in rolling fatigue life as compared to the comparative examples.

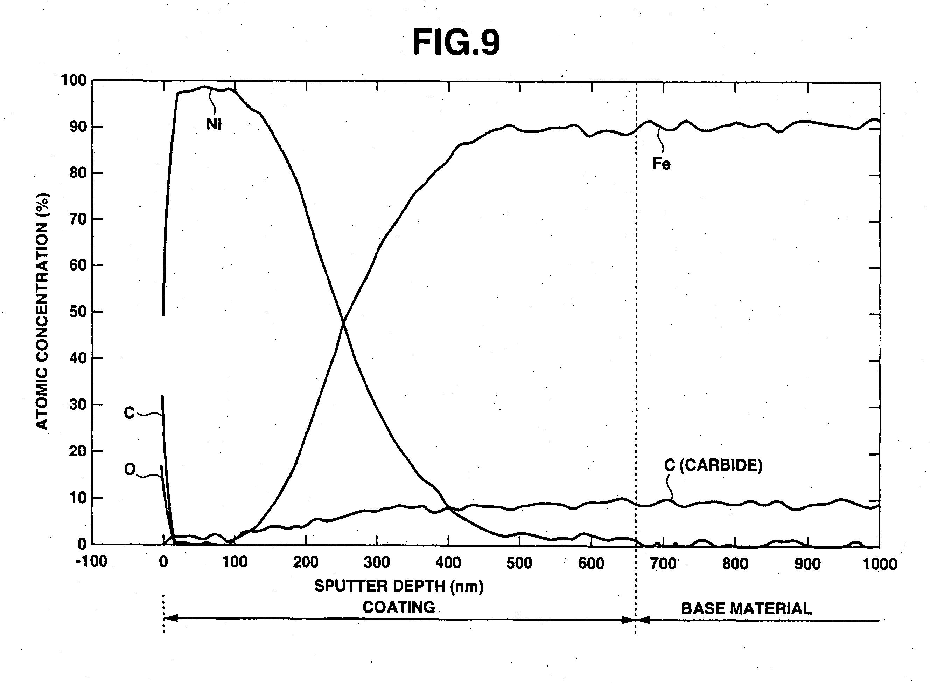

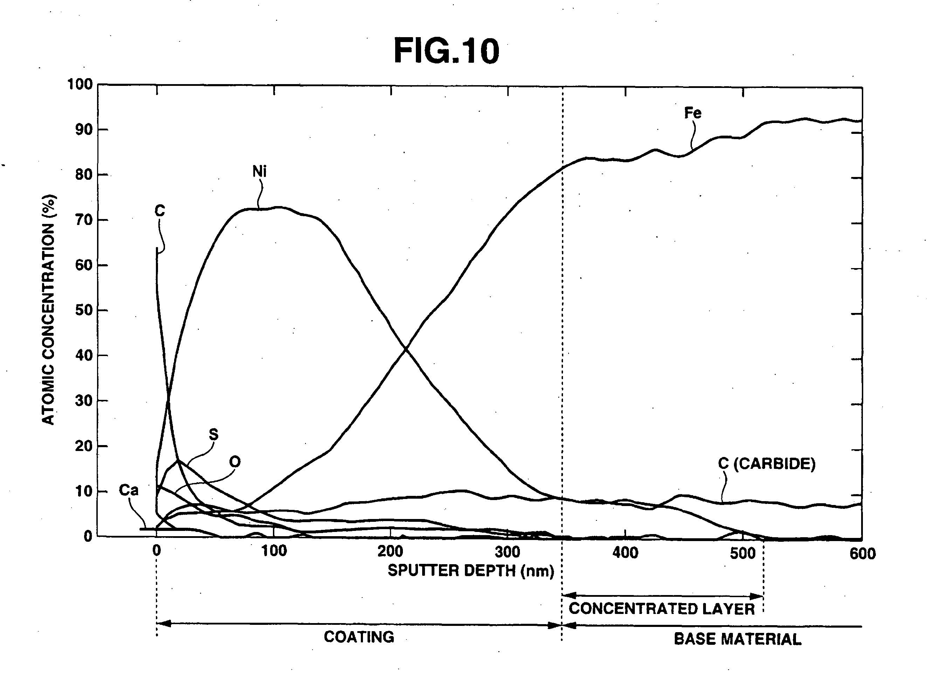

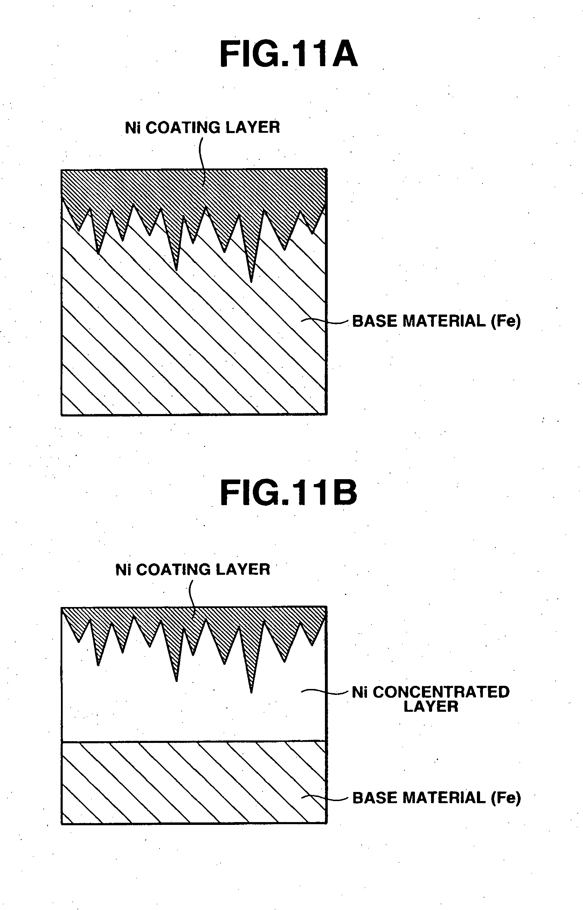

FIGS. 9 and 10 show the results of observation of Ni concentrated layer with an Auger electron spectroscope for samples formed with Ni coating film and samples subjected to running-in operation after Ni electroplating. FIGS. 9 and 10 show the results of measurement of depth profile of element in the depth direction observed during the process of sputtering from the rolling surface, with the Auger electron spectroscope (SAM4300 by PHI). FIGS. 11A and 11B schematically show Ni coating film and Ni concentrated layer in the base region, respectively, for examples of FIG. 9 and FIG. 10. The rolling surface of a base material has minute ruggedness as schematically shown in FIGS. 11A and 11B, due to the roughness of the finishing operation. The Ni coating is filled in recessed portions of the ruggedness. Therefore, the Ni concentration decreases in the depth direction as shown in FIGS. 9 and 10 in accordance with the ratio between the area of the recessed portions (of Ni coating material) and the area of the projected portions (of the base material) of the ruggedness. In the case of FIG. 10, there is formed a Ni concentrated region of a higher Ni concentration shaped like a shelf or terrace having a relatively flat top extending in the depth direction, as shown in FIG. 10. This shelf-like Ni concentrated portion is formed in the deep position deeper than the bottoms of the recessed portions of the ruggedness. In this example, the shelf-like concentrated portion or layer has a thickness or depth equal to or greater than 100 nm, and the concentration of the low hydrogen diffusion substance is equal to or higher than 5 at% in the shelf-like concentrated portion. In this way, Ni of the coating film penetrates and diffuses into the base material, and thereby forms the Ni concentrated layer deep in the base region, as shown in FIG. 11B. A boundary between the coating (or electroplating) layer and the base material was determined by taking, into consideration, various factors obtained by the observation with sectional SEM observation and the surface roughness of the base material before electroplating. FIG. 10 shows the existence of concentrated layer in the sample subjected to running-in operation whereas no or little concentrated layer was observed in samples treated only with Ni electroplating. In the example of FIG. 9 and FIG. 11A subjected only to the Ni electroplating, there is formed no or little Ni concentrated layer. By contrast, the example of FIG. 10 and 11B subjected to the running-in operation shows the Ni concentrated layer.

Even in the samples (such as Practical Examples 1 and 2) treated only with Ni electroplating, Ni concentrated layer was observed in the analysis of rolling surface after test conducted under the above-mentioned endurance test conditions. Therefore, it is proved that a concentrated layer can be formed by a normal operation without performing a special running-in operation. By the synergistic effect of Ni coating layer and Ni concentrated layer, moreover, it is considered possible to further prolong the life by promoting the formation of a concentrated layer by electroplating treatments before and after a running-in operation or by a combination of a running-in operation plus electroplating treatment.

In these practical examples, a concentrated layer is formed by a running-in operation after the formation of a coating film layer. Instead, it is possible to form a concentrated layer by roller burnishing or direct ion implantation.

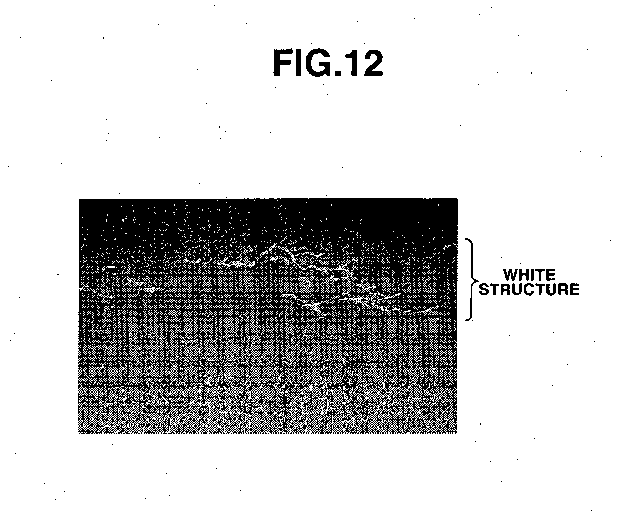

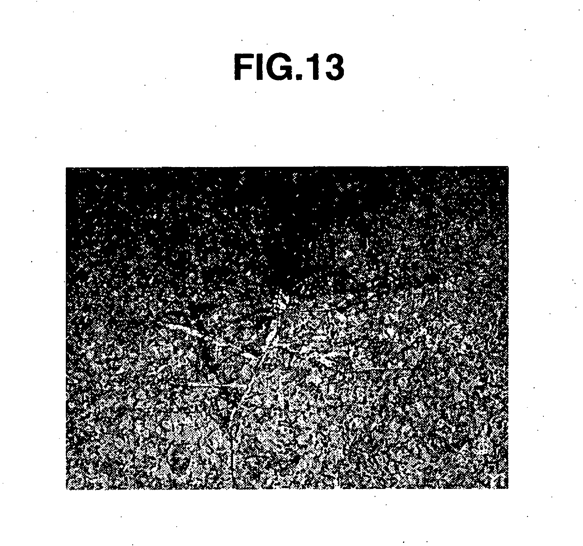

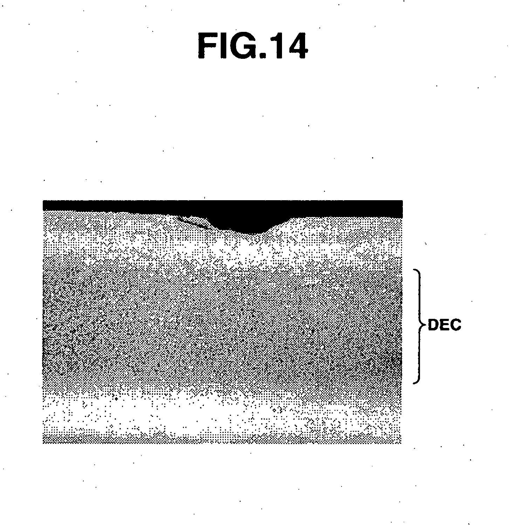

As to each rolling member (rotation member) shown in Tables 4, 6 and 8, as in Table 2, the short-life samples show distorted white structure (B-type/hydrogen embrittlement type breakage mode). As an example, FIG. 12 shows a distorted white structure in a cross sectional structure near a flaking portion in the case of Tables 4 and 6, and FIG. 13 shows a cross sectional structure near a flaking portion in the case of Table 8. As shown in Tables 5, 7 and 9, however, the practical examples according to the present invention restrain the hydrogen penetration significantly and thereby provide the results of long life by preventing the flaking of B-type and causing the shift to the DEC type or a state having no structure change. FIG. 14 shows, as one example, a structure of the DEC type. The present invention is also applicable to bearings used in a transmission and is effective in the same manner.

The breakage mode in the case of small and large rollers under the test conditions as shown in Table 10 was different from the mode in the case of the test of a bearing as a single unit, and the long-life samples showed no white structure change in the rolling portion. On the other hand, the short-life samples showed irregular white structure (of B-type) similar to the structure shown in FIG. 8B. From the results of the above-mentioned bearing test machine, it is assumed that short-life flaking accompanied by B-type structure change in the roller pitching test machine is flaking of hydrogen embrittlement type due to penetrating hydrogen.

Furthermore, it is confirmed that, under the rolling contact condition with slide motion of large extent, the hydrogen blocking (or insulating) layer according to the present invention can prevent an undesired change in the internal structure, and improves the rolling fatigue life significantly as compared to the comparative examples. Like the roller bearing, a Ni or Cu concentrated layer was formed in the surface after running-in operation or endurance.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

**Table 2**

| | SPEC | Forming Method | Before-test Film Thickness (µm) | Conc Layer (Before Test) | Conc Layer (After Test) | Life (cycles) | Damage Mode |
|---|---|---|---|---|---|---|---|
| PE1 | Ni Film | Ni Strike+Ni Electroplating | 4 | - | 120 nm | 2.30E+08 | A |
| PE2 | Ni Film | Ni Strike+ Electroless | 5 | - | 80 nm | 1.67E+08 | |
| PE3 | Ni+P Film | Ni Strike + Ni-P Electroplating | 5 | - | 90 nm | 1.93E+08 | A |
| PE4 | Ni Film+Conc Layer | (Ni Strike+Ni Electroplating)+Run-in+(Ni Strike+Ni Electroplating) | 5 | 40 nm | 200 nm | 3.77E+08 | A |
| PE5 | Ni Film+Conc Layer | (Ni Strike+Ni Electroplating) +Run-in | 0.5 | 60 nm | 90 nm | 2.15E+08 | A |
| PE5-1 | Ni Film+Conc Layer | (Ni Strike+Ni Electroplating)+Run-in | 0.06 | 60 nm | 80 nm | 2.30E+08 | A |
| PE5-2 | Ni Film+Conc Layer | (Ni Strike+Ni Electroplating)+R un-in | <0.02 | 110 nm | 150 nm | 1.98E+08 | A |
| PE6 | Cu Film | Cu Electroplating | 4 | - | 30 nm | 1.46E+08 | A |
| PE7 | Cu Film | (Cu Electroplating) + (Run-in)+ (Cu Electroplating | 4 | 30 nm | 100 nm | 1.64E+08 | A |
| PE8 | Pd Film | Pd Electroplating | 2 | - | 30 nm | 9.40E+07 | A |
| | | | | | | | |
| CE1 | No Film | None | - | - | - | 4.05E+07 | B |
| CE2 | Triiron Tetroxide Film | Iron Oxide Treatment | 2 | - | - | 4.86E+07 | B |

**Table 4**

| | SPEC | Forming Method | Before-test Film Thickness (µm) | Conc Layer (Before Test) | Conc Layer (After Test) | Life (Hr) | Structure Change |
|---|---|---|---|---|---|---|---|
| PE9 | Ni Film | Ni Strike+Ni Electroplating | 4 | - | 70 nm | 1050 | DEC |
| PE10 | Ni Film+Conc Layer | (Ni Strike+Ni Electroplating)+(Run-in)+(Ni Strike+Ni Electroplating) | 4 | 30 nm | 140 nm | 1455 | DEC |
| PE11 | Ni Film+Conc Layer | (Ni Strike+Ni Electroplating)+Run-in | 1 | 30 nm | 90 nm | 1157 | DEC |
| PE12 | Cu Film | Cu Electroplating | 5 | - | 30 nm | 654 | DEC |
| | | | | | | | |
| CE3 | No Film | None | - | - | - | 178 | B Type |

**Table 6**

| | SPEC | Forming Method | Before-test Film Thickness (µm) | Conc Layer (Before Test) | Conc Layer (After Test) | L50 Life (rev) | Structure Change |
|---|---|---|---|---|---|---|---|
| PE13 | Ni Film | Ni Strike+Ni Electroplating | 5 | - | 60 nm | 2.71E+07 | DEC |
| PE14 | Ni Film+Conc Layer | (Ni Strike+Ni Electroplating)+Run-in | 1.5 | 20 nm | 70 nm | 4.26E+07 | DEC |
| PE15 | Cu Film | Cu Electroplating | 4 | - | 80 nm | 1.43E+07 | DEC |
| PE16 | Cu Film + Conc Layer | (Cu Electroplating) + Run-In | 0.5 | 30 nm | 70 nm | 1.81E+07 | DEC |
| | | | | | | | |
| CE4 | No Film | None | - | - | - | 3.06E+06 | B Type |

**Table 8**

| | SPEC | Forming Method | Before-test Film Thickness (µm) | Conc Layer (Before Test) | Conc Layer (After Test) | L50 Life (rev) | Hydrogen Embrittlement |
|---|---|---|---|---|---|---|---|
| PE17 | Ni Film | Ni Strike+Ni Electroplating + Baking | 5 | - | 30 nm | 1.14E+07 | None |
| PE18 | Ni Film+Conc Layer | (Ni Strike+Ni Electroplating)+ Run-In | 1.5 | 20 nm | 50 nm | 1.47E+07 | None |
| PE19 | Cu Film | Cu Electroplating | 0.5 | - | 10 nm | 3.48E+06 | None |
| | | | | | | | |
| CE5 | No Film | None | - | - | - | 1.20E+06 | B Type |

**Table 10**

| | SPEC | Forming Method | Before-test Film Thickness (µm) | Conc Layer (Before Test) | Conc Layer (After Test) | Life | Structure Change |
|---|---|---|---|---|---|---|---|
| PE20 | Ni Film | Ni Strike+Ni Electroplating | 5 | - | 40 nm | 9.5E+06 | No Change |
| PE21 | Ni Film+Conc Layer | (Ni Strike+Ni Electroplating)+(Run-In)+(Ni Strike+Ni Electroplating | 15 | 150 nm | 160 nm | 3.3E+07 | No Change |
| PE22 | Cu Film | Cu Electroplating | 10 | - | 30 nm | 7.8E+06 | No Change |
| | | | | | | | |
| CE6 | No Film | None | - | - | - | 1.5E+06 | B Type |

## Claims

1. A rotary member having a contact surface for contacting with a mating body in relative motion, with the aid of a lubricant, the rotary member comprising:
a base region of a ferrous base material; and
a surface layer formed in the contact surface for contacting with the mating body in the relative motion, the surface layer including
a coating layer containing, as main component, a substance which is lower in hydrogen diffusion coefficient than the base material, the coating layer being formed in the contact surface; and
a concentrated layer formed in the base region by diffusion of the substance from the coating layer into the base region,
**characterized in that**
the surface layer is a hydrogen blocking layer including the concentrated layer and the coating layer, wherein the substance of the coating layer is Ni or a Ni compound and the thickness of the coating layer being an outermost layer forming the contact surface is smaller than 0.1 micrometer.

2. The rotary member as claimed in claim 1, **characterized in that** the hydrogen blocking layer forms the contact surface for contacting with the mating body under the condition of lubrication, the ferrous base material is steel, the substance which is lower in the hydrogen diffusion coefficient than the base material is an element or a compound, and the lubricant includes at least one of oil, grease and a mixture of a refrigerant and a lubricant soluble in the refrigerant.

3. The rotary member as claimed in claim 1 or 2, **characterized in that** the hydrogen diffusion coefficient D of the substance is;
D≤10⁻⁵ cm²/s in a temperature range of 10³/T≥2, where T is the temperature expressed in Kelvin (K).

4. The rotary member as claimed in claim 1 or 2, **characterized in that** the hydrogen diffusion coefficient D of the substance is;
D≤10⁻⁶ cm²/s in a temperature range of 10³/T≥2, where T is the temperature expressed in Kelvin (K).

5. The rotary member as claimed in claim 1 or 2, **characterized in that** the hydrogen diffusion coefficient D of the substance is;
D≤10⁻⁸ cm²/s at a temperature of 300 K.

6. The rotary member as claimed in one of claims 1 to 5, **characterized in that** the concentrated portion of the hydrogen blocking layer is a portion in which the concentration of the substance is increased.

7. The rotary member as claimed in one of claims 1 to 6, **characterized in that** the coating layer is a coating film formed by metal plating which is one of electroplating and electroless plating.

8. The rotary member as claimed in one of claims 1 to 7, **characterized in that** the concentrated portion is in the form of a layer having a thickness greater than or equal to 50 nm.

9. The rotary member as claimed in one of claims 1 to 8, **characterized in that** the concentrated portion is a portion in which the atomic concentration of the substance is higher than or equal to 5 atomic percent, and the concentrated portion extends from the surface of the base region to a depth greater than or equal to 100 nm.

10. A rolling bearing for a vehicle, comprising the rotary member as claimed in one of claims 1 to 9.

11. A rolling member for a toroidal continuously variable transmission, comprising the rotary member as claimed in one of claims 1 to 9.

12. A gear for a motor vehicle, comprising the rotary member as claimed in one of claims 1 to 9.

13. A process of producing a rotary member having a contact surface for contacting with a mating body in relative motion with lubrication, the process comprising:
preparing a base region of a ferrous base material; and
forming a coating layer of a low hydrogen diffusion substance which is lower in hydrogen diffusion coefficient than the base material, the coating layer forming the contact surface of the rotary member; and
forming a concentrated portion by causing the low hydrogen diffusion substance of the coating layer to diffuse into the base material;
**characterized in that**
the concentrated portion is formed by causing the low hydrogen diffusion substance of the coating layer to diffuse into the base material by an operation of putting the rotary member in frictional contact with a mating body.

14. A rotary member having a contact surface for contacting with a mating body in relative motion, with the aid of a lubricant, the rotary member comprising:
a base region of a ferrous base material; and
a surface layer formed in the contact surface for contacting with the mating body in the relative motion, the surface layer including a concentrated portion formed in the base region and made of a substance lower in hydrogen diffusion coefficient than the base material;
**characterized in that**
the surface layer is a hydrogen blocking layer including the concentrated portion which is in the form of a layer having a thickness greater than or equal to 50 nm, and
the concentrated portion is an outermost layer forming the contact surface of the rotary member.

15. The rotary member as claimed in claim 14, **characterized in that** the hydrogen blocking layer forms the contact surface for contacting with the mating body under the condition of lubrication, the ferrous base material is steel, the substance which is lower in the hydrogen diffusion coefficient than the base material is an element or a compound, and the lubricant includes at least one of oil, grease and a mixture of a refrigerant and a lubricant soluble in the refrigerant.

16. The rotary member as claimed in claim 14, **characterized in that** the concentrated portion is a layer formed by ion implantation.

## Patentansprüche

1. Drehglied mit einer Kontaktfläche für einen Kontakt mit einem komplementären Körper in einer Relativbewegung unter Zuhilfenahme eines Schmiermittels, wobei das Drehglied umfasst:
einen Basisbereich aus einem eisenhaltigen Basismaterial, und
eine Oberflächenschicht, die an der Kontaktfläche für einen Kontakt mit dem komplementären Körper in der Relativbewegung ausgebildet ist, wobei die Oberflächenschicht umfasst:
eine Beschichtungsschicht, die als Hauptkomponente eine Substanz enthält, die einen niedrigeren Wasserstoffdiffusionskoeffizienten aufweist als das Basismaterial, wobei die Beschichtungsschicht an der Kontaktfläche ausgebildet ist, und
eine konzentrierte Schicht, die in dem Basisbereich durch eine Diffusion der Substanz von der Beschichtungsschicht in den Basisbereich ausgebildet wird,
**dadurch gekennzeichnet, dass**
die Oberflächenschicht eine Wasserstoffblockierungsschicht ist, die die konzentrierte Schicht und die Beschichtungsschicht umfasst, wobei die Substanz der Beschichtungsschicht Ni oder eine Ni-Verbindung ist und die Dicke der Beschichtungsschicht als einer äußersten Schicht der Kontaktfläche kleiner als 0,1 Mikrometer ist.

2. Drehglied nach Anspruch 1, **dadurch gekennzeichnet, dass** die Wasserstoffblockierungsschicht die Kontaktfläche für einen Kontakt mit dem komplementären Körper unter einer Schmierungsbedingung bildet, das eisenhaltige Material Stahl ist, die Substanz mit einem niedrigeren Wasserstoffdiffusionskoeffizienten als das Basismaterial ein Element oder eine Verbindung ist und das Schmiermittel Öl, Fett und/oder eine Mischung aus einem Kühlmittel und einem in dem Kühlmittel löslichen Schmiermittel enthält.

3. Drehglied nach Anspruch 1 oder 2, **dadurch gekennzeichnet, dass** der Wasserstoffdiffusionskoeffizient D der Substanz D ≤ 10⁻⁵ cm²/s in einem Temperaturbereich von 10³/T ≥ 2 ist, wobei T die in Kelvin (K) ausgedrückte Temperatur ist.

4. Drehglied nach Anspruch 1 oder 2, **dadurch gekennzeichnet, dass** der Wasserstoffdiffusionskoeffizient D der Substanz D ≤ 10⁻⁶ cm²/s in einem Temperaturbereich von 10³/T ist, wobei T die in Kelvin (K) ausgedrückte Temperatur ist.

5. Drehglied nach Anspruch 1 oder 2, **dadurch gekennzeichnet, dass** der Wasserstoffdiffusionskoeffizient D der Substanz D ≤ 10⁻⁸ cm²/s bei einer Temperatur von 300 K ist.

6. Drehglied nach einem der Ansprüche 1 bis 5, **dadurch gekennzeichnet, dass** der konzentrierte Teil der Wasserstoffblockierungsschicht ein Teil ist, in dem die Konzentration der Substanz erhöht ist.

7. Drehglied nach einem der Ansprüche 1 bis 6, **dadurch gekennzeichnet, dass** die Beschichtungsschicht ein Beschichtungsfilm ist, der durch ein Metallplattieren ausgebildet wird, das ein galvanisches oder nicht-galvanisches Plattieren sein kann.

8. Drehglied nach einem der Ansprüche 1 bis 7, **dadurch gekennzeichnet, dass** der konzentrierte Teil die Form einer Schicht mit einer Dicke größer als oder gleich 50 nm aufweist.

9. Drehglied nach einem der Ansprüche 1 bis 8, **dadurch gekennzeichnet, dass** der konzentrierte Teil ein Teil ist, in dem die Atomkonzentration der Substanz höher als oder gleich 5 Atomprozent ist, wobei sich der konzentrierte Teil von der Oberfläche des Basisbereichs zu einer Tiefe größer oder gleich 100 nm erstreckt.

10. Wälzlager für ein Fahrzeug, das ein Drehglied nach einem der Ansprüche 1 bis 9 umfasst.

11. Wälzlager für ein stufenloses Toroidgetriebe, das das Drehglied nach einem der Ansprüche 1 bis 9 umfasst.

12. Getriebe für ein Kraftfahrzeug, das das Drehglied nach einem der Ansprüche 1 bis 9 umfasst.

13. Verfahren zum Herstellen eines Drehglieds mit einer Kontaktfläche für einen Kontakt mit einem komplementären Körper in einer Relativbewegung mit einer Schmierung, wobei das Verfahren umfasst:
Vorbereiten eines Basisbereichs aus einem eisenhaltigen Basismaterial, und
Ausbilden einer Beschichtungsschicht aus einer Substanz mit einer niedrigen Wasserstoffdiffusion, die einen niedrigeren Wasserstoffdiffusionskoeffizienten aufweist als das Basismaterial, wobei die Beschichtungsschicht die Kontaktfläche des Drehglieds bildet, und
Ausbilden eines konzentrierten Teils, indem veranlasst wird, dass die Substanz mit einer niedrigen Wasserstoffdiffusion der Beschichtungsschicht in das Basismaterial diffundiert,
**dadurch gekennzeichnet, dass**
der konzentrierte Teil ausgebildet wird, indem durch einen Vorgang zum Versetzen des Drehglieds in einen Reibungskontakt mit einem komplementären Körper veranlasst wird, dass die Substanz mit einer niedrigen Wasserstoffdiffusion der Beschichtungsschicht in das Basismaterial diffundiert.

14. Drehglied mit einer Kontaktfläche für einen Kontakt mit einem komplementären Körper in einer Relativbewegung unter Zuhilfenahme eines Schmiermittels, wobei das Drehglied umfasst:
einen Basisbereich aus einem eisenhaltigen Basismaterial, und
eine Oberflächenschicht, die an der Kontaktfläche für einen Kontakt mit dem komplementären Körper in der Relativbewegung ausgebildet ist, wobei die Oberflächenschicht einen konzentrierten Teil enthält, der in dem Basisbereich ausgebildet ist und aus einer Substanz besteht, die einen niedrigeren Wasserstoffdiffusionskoeffizienten aufweist als das Basismaterial,
**dadurch gekennzeichnet, dass**
die Oberflächenschicht eine Wasserstoffblockierungsschicht ist, die den konzentrierten Teil enthält, der die Form einer Schicht mit einer Dicke größer oder gleich 50 nm aufweist, wobei der konzentrierte Teil eine äußerste Schicht ist, die die Kontaktfläche des Drehglieds bildet.

15. Drehglied nach Anspruch 14, **dadurch gekennzeichnet, dass** die Wasserstoffblockierungsschicht die Kontaktfläche für einen Kontakt mit dem komplementären Körper unter einer Schmierungsbedingung bildet, das eisenhaltige Material Stahl ist, die Substanz mit einem niedrigeren Wasserstoffdiffusionskoeffizienten als das Basismaterial ein Element oder eine Verbindung ist und das Schmiermittel Öl, Fett und/oder eine Mischung aus einem Kühlmittel und einem in dem Kühlmittel löslichen Schmiermittel enthält.

16. Drehglied nach Anspruch 14, **dadurch gekennzeichnet, dass** der konzentrierte Teil eine durch eine Ionenimplantation ausgebildete Schicht ist.

## Revendications

1. Élément tournant comportant une surface permettant d'entrer en contact, grâce à l'aide d'un lubrifiant, avec un corps apparié en mouvement relatif, l'élément tournant comprenant :
une zone de base constituée d'un matériau de base ferreux, et
une couche de surface formée dans la surface de contact permettant d'entrer en contact avec le corps apparié en mouvement relatif, la couche de surface incluant
une couche de revêtement contenant, comme composante principale, une substance plus basse en termes de coefficient de diffusion de l'hydrogène que le matériau de base, la couche de revêtement étant formée dans la surface de contact, et
une couche concentrée formée dans la zone de base par la diffusion de la substance provenant de la couche de revêtement dans la zone de base,
**caractérisé en ce que**
la couche de surface est une couche d'appauvrissement en hydrogène incluant la couche concentrée et la couche de revêtement, la substance de la couche de revêtement étant constituée de Ni ou d'un composé de Ni, et l'épaisseur de la couche de revêtement, qui est la couche la plus extérieure formant la surface de contact, est inférieure à 0.1 micron.

2. Élément tournant selon la revendication 1, **caractérisé en ce que** la couche d'appauvrissement en hydrogène forme la surface de contact permettant d'entrer en contact avec le corps apparié sous la condition d'une lubrification, le matériau de base ferreux est de l'acier, la substance qui est plus faible en termes de coefficient de diffusion de l'hydrogène que le matériau de base est un élément ou un composé et le lubrifiant inclut au moins l'un d'huile, de graisse et d'un mélange d'un réfrigérant et d'un soluble lubrifiant dans le réfrigérant.

3. Élément tournant selon la revendication 1 ou 2, **caractérisé en ce que** le coefficient de diffusion de l'hydrogène D de la substance est :
D ≤ 10⁻⁵ cm² / s dans une plage de température de 10³ / T ≥ 2, où T est la température exprimée en kelvins (K) .

4. Élément tournant selon la revendication 1 ou 2, **caractérisé en ce que** le coefficient de diffusion de l'hydrogène D de la substance est :
D ≤ 10⁻⁶ cm² / s dans une plage de température de 10³ / T ≥ 2, où T est la température exprimée en kelvins (K) .

5. Élément tournant selon l'une des revendications 1 à 5, **caractérisé en ce que** le coefficient de diffusion de l'hydrogène D de la substance est :
D ≤ 10⁻⁸ cm² / s à une température de 300 K.

6. Élément tournant selon la revendication 1 ou 2, **caractérisé en ce que** la partie concentrée de la couche d'appauvrissement en hydrogène est une partie dans laquelle la concentration de la substance est augmentée.

7. Élément tournant selon l'une des revendications 1 à 6, **caractérisé en ce que** la couche de revêtement est un film de revêtement formé par placage métallique qui est l'un du placage électrolytique et du placage autocatalytique.

8. Élément tournant selon l'une des revendications 1 à 7, **caractérisé en ce que** la partie concentrée se trouve sous la forme d'une couche présentant une épaisseur supérieure ou égale à 50 nm.

9. Élément tournant selon l'une des revendications 1 à 8, **caractérisé en ce que** la partie concentrée est une partie dans lequel la concentration atomique de la substance est supérieure ou égale à 5 pour cent d'atomes, et la partie concentrée s'étend de la surface de la zone de base jusqu'à une profondeur supérieure ou égale à 100 nm.

10. Roulement à billes pour un véhicule, comprenant l'élément tournant conforme à l'une quelconque des revendications 1 à 9.

11. Élément de roulement pour une transmission toroïdale continûment variable, comprenant l'élément tournant conforme à l'une quelconque des revendications 1 à 9.

12. Engrenage pour un véhicule à moteur, comprenant l'élément tournant conforme à l'une quelconque des revendications 1 à 9.

13. Processus de fabrication d'un élément tournant comportant une surface de contact permettant d'entrer en contact avec un corps apparié en mouvement relatif avec une lubrification, le processus comprenant :
la préparation d'une zone de base constituée d'un matériau de base ferreux, et
la formation d'une couche de revêtement faite d'une substance de faible diffusion d'hydrogène qui est plus basse en termes de coefficient de diffusion de l'hydrogène que celui du matériau de base, la couche de revêtement formant la surface de contact de l'élément tournant, et
la formation d'une partie concentrée en forçant la substance de diffusion faible de l'hydrogène de la couche de revêtement à diffuser dans le matériau de base,
**caractérisé en ce que**
la partie concentrée est formée en forçant la substance de diffusion faible de l'hydrogène à diffuser dans le matériau de base grâce à une opération de mise en contact par frottement de l'élément tournant avec un corps apparié.

14. Élément tournant comportant une surface de contact permettant d'entrer en contact avec un corps apparié en mouvement relatif grâce à l'aide d'un lubrifiant, l'élément tournant comprenant :
une zone de base constituée d'un matériau de base ferreux, et
une couche de surface formée dans la surface de contact pour entrer en contact avec le corps apparié en mouvement relatif, la couche de surface incluant une partie concentrée formée dans la zone de base et constituée d'une substance de coefficient de diffusion de l'hydrogène plus bas que celui du matériau de base,
**caractérisé en ce que**
la couche de surface est une couche d'appauvrissement en hydrogène incluant la partie concentrée qui se trouve sous la forme d'une couche présentant une épaisseur supérieure ou égale à 50 nm, et
la partie concentrée est la couche la plus extérieure formant la surface de contact de l'élément tournant.

15. Élément tournant selon la revendication 14, **caractérisé en ce que** la couche d'appauvrissement en hydrogène forme la surface de contact permettant d'entrer en contact avec le corps apparié sous la condition d'une lubrification, le matériau de base ferreux est de l'acier, la substance qui présente un coefficient de diffusion de l'hydrogène plus bas que celui du matériau de base est un élément ou un composé et le lubrifiant inclut au moins l'un d'huile, de graisse et d'un mélange d'un réfrigérant et d'un soluble lubrifiant dans le réfrigérant.

16. Élément tournant selon la revendication 14, **caractérisé en ce que** la partie concentrée est une couche formée par implantation ionique.
